# EUROPEAN PATENT APPLICATION

(11) **EP 3 422 451 A1**
(43) Date of publication of application: **02.01.2019**
(21) Application number: 17756088.5
(22) Date of filing: 27.01.2017
(51) Int. Cl.: H01M 8/16, H01M 4/86, H01M 8/02

(54) **MICROBIAL FUEL CELL**

(30) Priority: 26.02.2016 JP 2016035468
(71) Applicant: Panasonic Corporation, Kadoma-shi, Osaka 571-8501 (JP)
(72) Inventor: YOSHIKAWA Naoki, Osaka 540-6270 (JP); KITADE Yuuki, Osaka 540-6270 (JP)
(74) Representative: Müller-Boré & Partner Patentanwälte PartG mbB
(86) International application number: PCT/JP2017/003011
(87) International publication number: WO 2017/145646

(57) **Abstract**

A microbial fuel cell (100) includes: a positive electrode (10, 10A); a negative electrode (20) that holds microorganisms; and an electrolysis solution (70). The positive electrode includes: an electric conductor layer (1): a porous body layer (2) that is laminated on the electric conductor layer and supports a catalyst (3) therein; and a water-repellent layer (4) that is laminated on a surface (lb) of the electric conductor layer, which is opposite of a surface (1a) thereof in contact with the porous body layer, or a surface (2b) of the porous body layer, which is opposite of a surface (2a) thereof in contact with the electric conductor layer. Then, the porous body layer and the negative electrode are immersed in the electrolysis solution, and at least a part of the water-repellent layer is exposed to a gas phase (90).

## Description

### TECHNICAL FIELD

The present invention relates to a microbial fuel cell. More specifically, the present invention relates to a microbial fuel cell capable of purifying wastewater and generating electrical energy.

### BACKGROUND ART

In recent years, a microbial fuel cell that generates power using biomass as sustainable energy has attracted attention. The microbial fuel cell is a wastewater treatment device that converts chemical energy of organic matter contained in domestic wastewater and industrial wastewater into electrical energy, and meanwhile, treats the organic matter by oxidatively decomposing the same. Then, the microbial fuel cell has features that sludge is generated less, and further, that energy is consumed less. However, power generated by microorganisms is extremely small, and a density of a current to be output is low, and therefore, the microbial fuel cell needs a further improvement.

As such a microbial fuel cell as described above, disclosed is a microbial fuel cell including: an electrolytic tank; an anode disposed in an inside of the electrolytic tank; and a cathode arranged in a body of the electrolytic tank, having one surface in contact with air on an outside of the electrolytic tank and the other surface in contact with the electrolysis solution (for example, refer to Patent Literature 1). The electrolytic tank holds the electrolysis solution, microorganisms, and a substrate for oxidative decomposition of the microorganisms. Then, a water stop layer containing silicone is formed on the one surface of the cathode that contacts air, and a catalyst layer on which a cathode catalyst is supported is formed on the other surface of the cathode. The catalyst layer is formed in such a manner that fine particles of the cathode catalyst are mixed with a binding agent solution to be then formed into paste, and that this paste is thereafter applied to the above other surface of the cathode and is dried.

### CITATION LIST

### PATENT LITERATURE

Patent Literature 1: Japanese Unexamined Patent Application Publication No. 2015-46361

### SUMMARY OF INVENTION

However, when the cathode catalyst is applied and dried after being formed into paste as in Patent Literature 1, the paste shrinks when being dried, and cracks occur in the obtained catalyst layer. Therefore, there has been a problem that the catalyst layer is peeled during use to degrade oxygen reduction properties of the cathode, resulting in that electrical energy cannot be obtained stably.

The present invention has been made in consideration of such a problem as described above, which is inherent in the prior art. Then, it is an object of the present invention to provide a microbial fuel cell capable of preventing the cracks of the catalyst layer from occurring, and capable of producing electrical energy stably.

In order to solve the above problem, a microbial fuel cell according to an aspect of the present invention includes: a positive electrode; a negative electrode that holds microorganisms; and an electrolysis solution. The positive electrode includes: an electric conductor layer; a porous body layer that is laminated on the electric conductor layer and supports a catalyst therein; and a water-repellent layer that is laminated on a surface of the electric conductor layer, the surface being opposite of a surface of the electric conductor layer in contact with the porous body layer, or a surface of the porous body layer, the surface being opposite of a surface of the porous body layer in contact with the electric conductor layer. The porous body layer and the negative electrode are immersed in the electrolysis solution, and at least a part of the water-repellent layer is exposed to a gas phase.

### BRIEF DESCRIPTION OF DRAWINGS

[Fig. 1] Fig. 1 is a schematic perspective view showing an example of a microbial fuel cell according to an embodiment of the present invention.
[Fig. 2] Fig. 2 is a cross-sectional view taken along a line A-A in Fig. 1.
[Fig. 3] Fig. 3 is an exploded perspective view showing a fuel cell unit in the above microbial fuel cell.
[Fig. 4] Fig. 4 is a schematic cross-sectional view showing an example of a positive electrode according to the embodiment of the present invention.
[Fig. 5] Fig. 5 is a schematic cross-sectional view showing another example of the positive electrode according to the embodiment of the present invention.
[Fig. 6] Fig. 6 is a graph showing relationships between electric potentials and current densities when oxygen reduction properties are evaluated with regard to positive electrodes of Example 1, Example 2 and Comparative example 1.
[Fig. 7] Fig. 7 is a graph showing relationships between electric potentials and current densities when oxygen reduction properties are evaluated with regard to positive electrodes of Example 3 and Comparative example 2.
[Fig. 8] Fig. 8 is a graph showing relationships between electric potentials and current densities when oxygen reduction properties are evaluated with regard to positive electrodes of Example 4 and Comparative example 3.
[Fig. 9] Fig. 9(a) is a picture showing the positive electrode of Example 1, and Fig. 9(b) is a picture showing the positive electrode of Comparative example 1.

### DESCRIPTION OF EMBODIMENTS

Hereinafter, a detailed description will be given of a microbial fuel cell according to this embodiment. Note that dimensional ratios in the drawings are exaggerated for convenience of explanation, and are sometimes different from actual ratios.

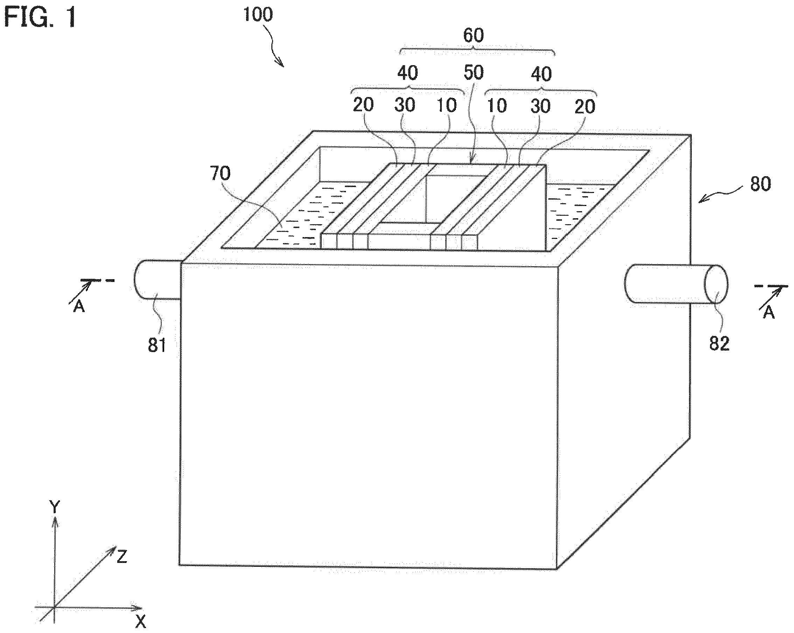

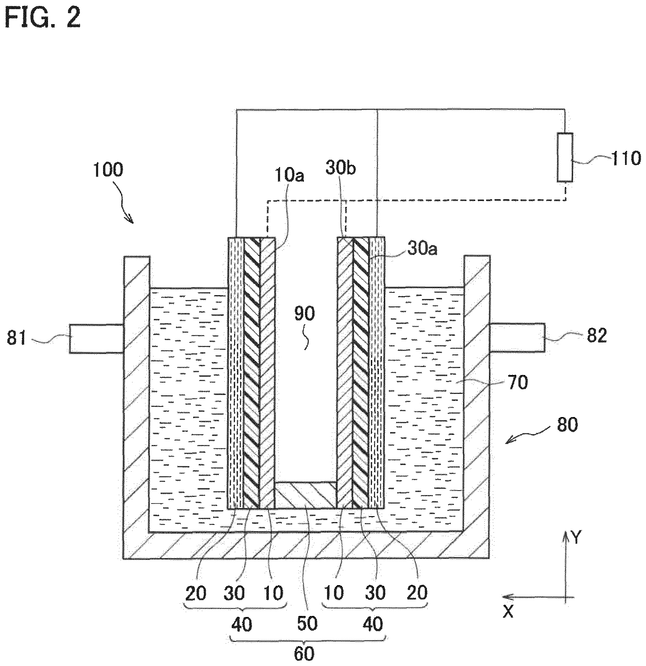

As shown in Fig. 1 and Fig. 2, a microbial fuel cell 100 according to this embodiment includes a plurality of electrode assemblies 40, each of which is composed of a positive electrode 10, a negative electrode 20 and an ion transfer layer 30. In the microbial fuel cell 100, as shown in Fig. 2, each of the negative electrodes 20 is disposed so as to contact one surface 30a of the ion transfer layer 30, and each of the positive electrodes 10 is disposed so as to contact a surface 30b of the ion transfer layer 30, which is opposite of the surface 30a.

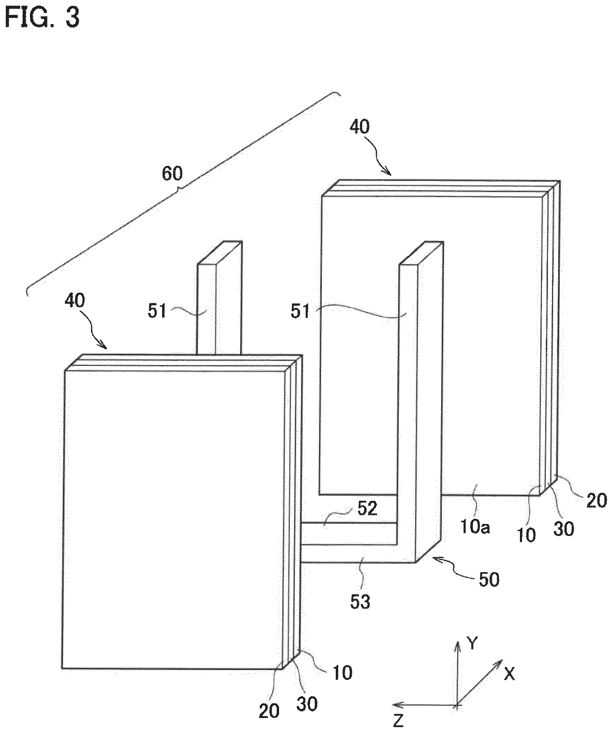

As shown in Fig. 3, such two electrode assemblies 40 are laminated on each other via a cassette substrate 50 so that the positive electrodes 10 face each other. The cassette substrate 50 is a U-shaped frame member that goes along outer peripheral portions of surfaces 10a in the positive electrodes 10. In the cassette substrate 50, an upper portion is open. That is, the cassette substrate 50 is a frame member in which bottom surfaces of two first columnar members 51 are coupled to each other by a second columnar member 52. Then, side surfaces 53 of the cassette substrate 50 are joined to the outer peripheral portions of the surfaces 10a of the positive electrodes 10, whereby the electrolysis solution 70 can be prevented from leaking to an inside of the cassette substrate 50 from the outer peripheral portions of the surfaces 10a of the positive electrodes 10.

Then, as shown in Fig. 2, a fuel cell unit 60 formed by laminating the two electrode assemblies 40 and the cassette substrate 50 on one another is disposed in an inside of a wastewater tank 80 so that the gas phase 90 communicating with the atmosphere is formed. The electrolysis solution 70 that is a liquid to be treated is held in the inside of the wastewater tank 80, and the positive electrodes 10, the negative electrodes 20 and the ion transfer layers 30 are immersed in the electrolysis solution 70.

As will be described later, each of the positive electrodes 10 includes a water-repellent layer 4 having water repellency. Therefore, the electrolysis solution 70 held in the inside of the wastewater tank 80 and the inside of the cassette substrate 50 are separated from each other, and the gas phase 90 is formed in an inner space formed of the two electrode assemblies 40 and the cassette substrate 50. Then, as shown in Fig. 2, the positive electrodes 10 and the negative electrodes 20 are electrically connected individually to an external circuit 110.

### [Positive electrode]

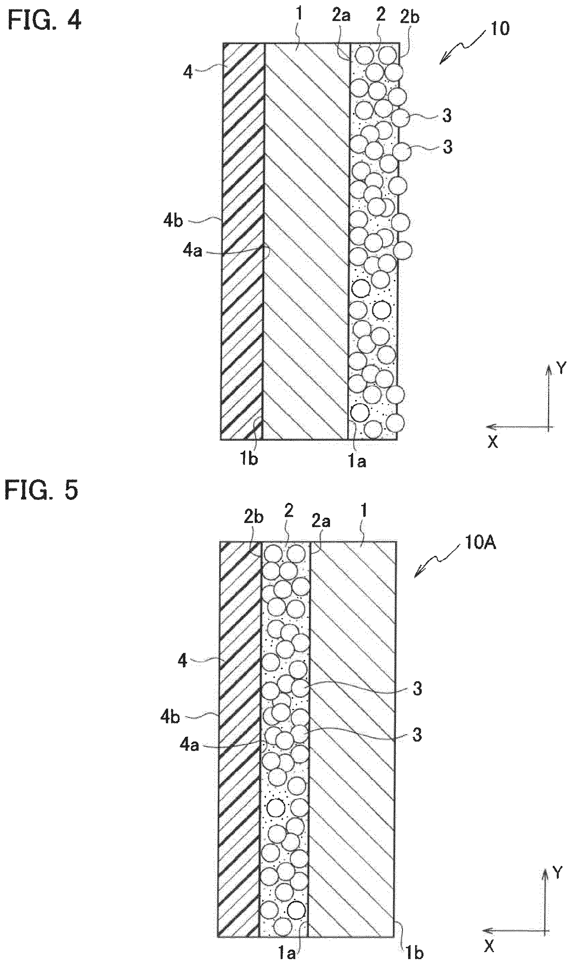

As shown in Fig. 4, each of the positive electrodes 10 according to this embodiment includes: an electric conductor layer 1; a porous body layer 2 that is laminated on the electric conductor layer 1 and supports a catalyst 3 therein; and a water-repellent layer 4 laminated on a surface 1b of the electric conductor layer 1, which is opposite of a surface 1a thereof in contact with the porous body layer 2. As shown in Fig. 5, each of positive electrodes 10A according to this embodiment includes: the electric conductor layer 1; the porous body layer 2 that is laminated on the electric conductor layer 1 and supports the catalyst 3 therein; and the water-repellent layer 4 laminated on a surface 2b of the porous body layer 2, which is opposite of a surface 2a thereof in contact with the electric conductor layer 1.

### (Electric conductor layer)

The electric conductor layer 1 in the positive electrode 10 has electric conductivity and oxygen permeability. By providing such an electric conductor layer 1 as described above in the positive electrode 10, it becomes possible to conduct electrons, which are generated by a local cell reaction to be described later, between the catalyst 3 and the external circuit 110. That is, as will be described later, the catalyst 3 is dispersed in an inside of the porous body layer 2, and further, the catalyst 3 is an oxygen reduction catalyst. Then, by providing the electric conductor layer 1 in the positive electrode 10, the electrons move from the external circuit 110 through the electric conductor layer 1 to the catalyst 3, and the catalyst 3 makes it possible to advance an oxygen reduction reaction caused by oxygen, hydrogen ions and electrons.

In order to ensure stable performance, in the positive electrode 10, it is preferable that oxygen efficiently permeate the water-repellent layer 4 and the electric conductor layer 1 and be supplied to the catalyst 3. Therefore, it is preferable that the electric conductor layer 1 be a porous body that has a large number of oxygen-permeable pores from the surface 1b facing the water-repellent layer 4 to the surface 1a opposite thereof. Moreover, it is particularly preferable that a shape of the electric conductor layer 1 be three-dimensionally mesh-like. Such a three-dimensional mesh shape makes it possible to impart high oxygen permeability and electric conductivity to the electric conductor layer 1.

An electrical conductive material that composes the electric conductor layer 1 is not particularly limited as long as the electric conductor layer 1 can ensure high electric conductivity. However, it is preferable that the electrical conductive material be made of at least one electrical conductive metal selected from the group consisting of aluminum, copper, stainless steel, nickel and titanium. These electrical conductive metals are provided with high corrosion resistance and electric conductivity, and accordingly, can be suitably used as the material that composes the electric conductor layer 1.

Moreover, the electrical conductive material may be a carbon material. As the carbon material, for example, at least one selected from the group consisting of carbon paper, carbon felt, carbon cloth and graphite sheet can be used. Moreover, the electrical conductive material may be composed of one selected from the group consisting of carbon paper, carbon felt, carbon cloth and graphite sheet, and may be a laminated body formed by laminating a plurality of these on one another. Such carbon paper and carbon felt which are nonwoven fabrics of carbon fiber, such carbon cloth that is a woven fabric of carbon fiber and such a graphite sheet made of graphite have high corrosion resistance and electrical resistivity equal to those of a metal material, and accordingly, are capable of achieving both of durability and electric conductivity.

Note that the graphite sheet mentioned above can be obtained as follows. First, natural graphite is subjected to chemical treatment by acid, and inserts are formed between graphene layers of graphite. Next, this is rapidly heated, whereby expanded graphite is obtained in which spaces between the graphene layers are stretched and expanded by a gas pressure caused by thermal decomposition of such interlayer inserts. Then, this expanded graphite is pressurized and rolled, whereby the graphite sheet is obtained. When the graphite sheet thus obtained is used as the electric conductor layer 1, the graphene layers in the graphite are arrayed along a direction YZ perpendicular to a lamination direction X. Therefore, it becomes possible to increase electric conductivity between the electric conductor layer 1 and the external circuit 110, and to further enhance efficiency of the cell reaction.

It is preferable that arithmetic mean roughness Ra of the surface 1a of the electric conductor layer 1, which is in contact with the porous body layer 2, be 0.1 µm or more and 100 µm or less. The arithmetic mean roughness Ra of the surface of the electric conductor layer 1 stays within this range, whereby the surface of the electric conductor layer 1 becomes likely to be flat. When the surface 1a of the electric conductor layer 1 is flat, the surface 1a easily adheres to the surface 2a of the porous body layer 2, which faces the same, and the electric conductor layer 1 and the porous body layer 2 can be tightly joined to each other. Moreover, as will be described later, it is preferable that the electric conductor layer 1 and the catalyst 3 be electrically connected to each other, and accordingly, it becomes possible to increase contact properties between the surface 1a of the electric conductor layer 1 and the catalyst 3.

The arithmetic mean roughness Ra of the surface in the electric conductor layer 1 can be obtained in conformity with Japanese Industrial Standard JIS B 0601: 2013 (Geometrical Product Specifications (GPS)-Surface texture: Profile method-Terms, definitions and surface texture parameters). Specifically, the surface of the electric conductor layer 1 is observed, for example, using a laser microscope, and arithmetic mean roughness Ra in each of ranges of 500 µm × 500 µm at three different spots is measured. Then, an average value of such obtained pieces of the arithmetic mean roughness Ra is calculated, whereby the arithmetic mean roughness Ra of the surface of the electric conductor layer 1 can be obtained.

### (Water-repellent layer)

As shown in Fig. 4, the positive electrode 10 is provided with the water-repellent layer 4 on the surface 1b of the electric conductor layer 1, which is opposite of the surface 1a in contact with the porous body layer 2. Alternatively, as shown in Fig. 5, the positive electrode 10A is provided with the water-repellent layer 4 on the surface 2b of the porous body layer 2, which is opposite of the surface 2a in contact with the electric conductor layer 1. The water-repellent layer 4 has water repellency, and accordingly, separates the electrolysis solution 70, which is a liquid phase held inside the wastewater tank 80, and the gas phase 90 from each other. Then, such providing of the water-repellent layer 4 makes it possible to prevent the electrolysis solution 70 from moving to the gas phase 90 side. Note that such "separation" as used herein refers to physical blocking.

The water-repellent layer 4 is in contact with the gas phase 90 containing oxygen, and diffuses a gas in the gas phase 90. Then, in the configuration shown in Fig. 4, the water-repellent layer 4 supplies the gas to the surface 1b of the electric conductor layer 1 substantially uniformly, and in the configuration shown in Fig. 5, the water-repellent layer 4 supplies the gas to the surface 2b of the porous body layer 2 substantially uniformly. Therefore, it is preferable that the water-repellent layer 4 be a porous body so as to be capable of diffusing the gas. Note that, since the water-repellent layer 4 has water repellency, a decrease of gas diffusibility can be prevented, which may result from the fact that pores of the porous body are closed due to dew condensation and the like. Moreover, since the electrolysis solution 70 is difficult to soak in an inside of the water-repellent layer 4, it becomes possible to efficiently flow oxygen from the surface 4b of the water-repellent layer 4, which contacts the gas phase 90, to the surface 4a facing the electric conductor layer 1.

It is preferable that the water-repellent layer 4 be formed of a woven fabric or a nonwoven fabric. Moreover, a material that composes the water-repellent layer 4 is not particularly limited as long as having water repellency and being capable of diffusing the gas in the gas phase 90. As the material that composes the water-repellent layer 4, for example, there can be used at least one selected from the group consisting of polyethylene, polypropylene, polybutadiene, nylon, polytetrafluoroethylene (PTFE), ethyl cellulose, poly-4-methylpentene-1, butyl rubber, and polydimethylsiloxane (PDMS). Each of these materials can easily form the porous body, and further, also has high water repellency, and accordingly, can enhance the gas diffusibility by preventing the pores from being closed. Note that, preferably, the water-repellent layer 4 has a plurality of through holes in the lamination direction X of the water-repellent layer 4 and the electric conductor layer 1.

In order to enhance the water repellency, the water-repellent layer 4 may be subjected to water-repellent treatment using a water-repellent agent as necessary. Specifically, a water-repellent agent such as polytetrafluoroethylene (PTFE) may be adhered to the porous body that composes the water-repellent layer 4, and may enhance the water repellency thereof.

In the positive electrode 10 shown in Fig. 4, it is preferable that the water-repellent layer 4 be joined to the electric conductor layer 1 via an adhesive in order to efficiently supply the gas to the surface 1b of the electric conductor layer 1. That is, it is preferable that the surface 4a of the water-repellent layer 4 be joined to the surface 1b of the electric conductor layer 1, which faces the same, via an adhesive. In this way, the diffused gas is directly supplied to the surface 1b of the electric conductor layer 1, and an oxygen reduction reaction can be carried out efficiently. From a viewpoint of ensuring adhesive properties between the water-repellent layer 4 and the electric conductor layer 1, it is preferable that the adhesive be provided on at least a part between the water-repellent layer 4 and the electric conductor layer 1. However, from a viewpoint of increasing the adhesive properties between the water-repellent layer 4 and the electric conductor layer 1 and supplying the gas to the electric conductor layer 1 stably for a long period, it is more preferable that the adhesive be provided over the entire surface between the water-repellent layer 4 and the electric conductor layer 1.

In the positive electrode 10A shown in Fig. 5, it is preferable that the water-repellent layer 4 be joined to the porous body layer 2 via the adhesive in order to efficiently supply the gas to the surface 2b of the porous body layer 2. That is, it is preferable that the surface 4a of the water-repellent layer 4 be joined to the surface 2b of the porous body layer 2, which faces the same, via the adhesive. In this way, the gas is directly supplied to the surface 2b of the porous body layer 2, and the oxygen reduction reaction can be carried out efficiently. From a viewpoint of ensuring adhesive properties between the water-repellent layer 4 and the porous body layer 2, it is preferable that the adhesive be provided on at least a part between the water-repellent layer 4 and the porous body layer 2. However, from a viewpoint of increasing the adhesive properties between the water-repellent layer 4 and the porous body layer 2 and supplying the gas to the porous body layer 2 stably for a long period, it is more preferable that the adhesive be provided over the entire surface between the water-repellent layer 4 and the porous body layer 2.

As the adhesive, an adhesive having oxygen permeability is preferable, and a resin can be used, which contains at least one selected from the group consisting of polymethyl methacrylate, methacrylic acid-styrene copolymer, styrene-butadiene rubber, butyl rubber, nitrile rubber, chloroprene rubber and silicone.

### (Porous body layer)

As shown in Fig. 4, the positive electrode 10 according to this embodiment includes the porous body layer 2 that is laminated on the electric conductor layer 1 and supports the catalyst 3 therein. The porous body layer 2 includes a sheet having a plurality of pores, and holds the catalyst 3 in insides of the pores. Then, the catalyst 3 is supported in a state of being dispersed in inner surfaces of the pores. Moreover, the surface 2a of the porous body layer 2 and the surface 1a of the electric conductor layer 1 are joined to each other, and the electric conductor layer 1 and the catalyst 3 are electrically connected to each other. As described above, the catalyst 3 is disposed on the surface 1a of the electric conductor layer 1 via the porous body layer 2, whereby it becomes possible to increase binding properties of the catalyst 3 to the electric conductor layer 1, and to increase the oxygen reduction properties of the positive electrode 10. That is, heretofore, catalyst particles have been mixed with a binding agent solution to obtain a dispersion liquid, and thereafter, this dispersion liquid has been applied and dried, whereby a catalyst layer has been formed. Therefore, when the catalyst layer is dried, cracks have occurred therein to peel the catalyst layer in some cases. However, in the positive electrode 10 of this embodiment, the catalyst particles are disposed on the surface of the electric conductor layer 1 via the porous body layer 2, and therefore, the catalyst does not shrink even if being dried, and it becomes possible to prevent the cracks and the peeling from occurring.

As mentioned above, in the positive electrode 10, the surface 1a of the electric conductor layer 1 and the surface 2a of the porous body layer 2 are joined to each other, and the catalyst 3 supported on the porous body layer 2 and the electric conductor layer 1 are electrically connected to each other. As a result, the electrons generated in the negative electrode 20 move to the external circuit 110 through the negative electrode 20, and further, move from the external circuit 110 to the electric conductor layer 1 of the positive electrode 10, and contribute to the oxygen reduction reaction to be described later. Therefore, as long as the electric conductor layer 1 and the porous body layer 2 are joined to each other, the water-repellent layer 4 may be disposed on the electric conductor layer 1 side, or may be disposed on the porous body layer 2 side. That is, as shown in Fig. 4, the positive electrode 10 may be provided with the water-repellent layer 4 on the surface 1b of the electric conductor layer 1, which is opposite of the surface 1a in contact with the porous body layer 2. Alternatively, as shown in Fig. 5, the positive electrode 10A may be provided with the water-repellent layer 4 on the surface 2b of the porous body layer 2, which is opposite of the surface 2a in contact with the electric conductor layer 1. In either case, it becomes possible to exert a function of the microbial fuel cell 100, which will be described later, and to exert high oxygen reduction properties.

The porous body layer 2 includes a large number of the pores into which the particles of the catalyst 3 are held. Note that, preferably, the porous body layer 2 includes pores continuous from the surface 2a shown in Fig. 4 to the opposite surface 2b, and the catalyst 3 is supported in insides of the pores. In this way, on the surface of the catalyst 3, it becomes possible to efficiently carry out the reaction between oxygen that has penetrated the insides of the pores from the surface 2a and the hydrogen ions which have penetrated the insides of the pores from the surface 2b.

The porous body layer 2 may be an electrical conductor or an electrical insulator. However, from a viewpoint of promoting the oxygen reduction reaction carried out by oxygen, the hydrogen ions and the electrons, it is preferable that the electric conductor layer 1 and the catalyst 3 be electrically connected to each other. Therefore, when the porous body layer 2 is an electrical insulator, it is preferable that the plural particles of the catalyst 3 supported in the pores of the porous body layer 2 be electrically connected to one another, and further, that the catalyst 3 be electrically connected to the surface 1a of the electric conductor layer 1. Moreover, it is also preferable that the catalyst 3 be in direct contact with the surface 1a of the electric conductor layer 1.

As a material that composes the porous body layer 2, for example, there can be used at least one selected from the group consisting of a resin material such as polyethylene and polypropylene, electrical conductive metal such as aluminum, copper, stainless steel, nickel and titanium, carbon paper and carbon felt.

As the porous body layer 2, there can be used at least one selected from the group consisting of a sheet with a woven fabric structure, a sheet with a nonwoven fabric structure, and a sheet with a continuous foam structure. Moreover, the porous body layer 2 may be a laminated body formed by laminating a plurality of the sheets on one another. However, it is preferable that the porous body layer 2 be made of a nonwoven fabric. Such a sheet having the plurality of pores is used as the porous body layer 2 of the negative electrode 20, whereby it becomes easy for oxygen and the hydrogen ions to move in a direction of the catalyst 3, and it becomes possible to increase a rate of the oxygen reduction reaction.

In the insides of the pores of the porous body layer 2, the catalyst 3 may be bound thereto using a binding agent. That is, the catalyst 3 may be supported on the surfaces of such pore insides of the porous body layer 2 using the binding agent. In this way, the oxygen reduction properties of the catalyst 3 can be prevented from being degraded due to desorption of the catalyst 3 from the pore insides of the porous body layer 2. Such a binding agent as described above is not particularly limited as long as the binding agent can bind the particles to one another. As the binding agent, for example, it is preferable to use at least one selected from the group consisting of polytetrafluoroethylene (PTFE), polyvinylidene fluoride (PVDF), and ethylene-propylene-diene copolymer (EPDM). Moreover, it is also preferable to use Nafion as the binding agent.

It is preferable that the catalyst 3 supported on the porous body layer 2 be the oxygen reduction catalyst. The catalyst 3 is the oxygen reduction catalyst, whereby it becomes possible to further increase a reaction rate between oxygen and the hydrogen ions, which are transferred by the water-repellent layer 4 and the electric conductor layer 1.

It is preferable that the oxygen reduction catalyst be a carbon-based material doped with metal atoms. The metal atoms are not particularly limited; however, it is preferable that the metal atoms be atoms of at least one type of metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum and gold. In this case, the carbon-based material exerts excellent performance particularly as a catalyst for promoting an oxygen reduction reaction. An amount of the metal atoms contained in the carbon-based material may be appropriately set so that the carbon-based material has excellent catalytic performance.

It is preferable that the carbon-based material be further doped with atoms of one or more nonmetals selected from nitrogen, boron, sulfur and phosphorus. An amount of such nonmetal atoms doped into the carbon-based material may also be appropriately set so that the carbon-based material has such excellent catalytic performance.

The carbon-based material is obtained, for example, in such a manner that a carbon-source raw material such as graphite and amorphous carbon is used as a base, and that this carbon-source raw material is doped with the metal atoms and the atoms of the one or more nonmetals selected from nitrogen, boron, sulfur and phosphorus.

Combinations of the metal atoms and the nonmetal atoms, which are doped into the carbon-based material, are appropriately selected. In particular, it is preferable that the nonmetal atoms contain nitrogen, and that the metal atoms contain iron. In this case, the carbon-based material can have particularly excellent catalytic activity. Note that the nonmetal atoms may be only nitrogen. Moreover, the metal atoms may be only iron.

The nonmetal atoms may contain nitrogen, and the metal atoms may contain at least either one of cobalt and manganese. Also in this case, the carbon-based material can have particularly excellent catalytic activity. Note that the nonmetal atoms may be only nitrogen. Moreover, the metal atoms may be only cobalt, only manganese, or only cobalt and manganese.

The carbon-based material composed as the oxygen reduction catalyst can be prepared as follows. First, a mixture is prepared, which contains a nonmetal compound containing at least one nonmetal selected from the group consisting of nitrogen, boron, sulfur and phosphorus, a metal compound, and the carbon-source raw material. Then, this mixture is heated at a temperature of 800 °C or more to 1000 °C or less for 45 seconds or more and less than 600 seconds. In this way, the carbon-based material composed as the oxygen reduction catalyst can be obtained.

Here, as mentioned above, for example, graphite or amorphous carbon can be used as the carbon-source raw material. Moreover, the metal compound is not particularly limited as long as the metal compound is a compound containing metal atoms capable of coordinate bond with the nonmetal atoms to be doped into the carbon-source raw material. As the metal compound, for example, there can be used at least one selected from the group consisting of: inorganic metal salt such as metal chloride, nitrate, sulfate, bromide, iodide and fluoride; organic metal salt such as acetate; a hydrate of the inorganic metal salt; and a hydrate of the organic metal salt. For example, when the graphite is doped with iron, it is preferable that the metal compound contain iron (III) chloride. Moreover, when the graphite is doped with cobalt, it is preferable that the metal compound contain cobalt chloride. Moreover, when the carbon-source raw material is doped with manganese, it is preferable that the metal compound contain manganese acetate. It is preferable that an amount of use of the metal compound be set so that a ratio of the metal atoms in the metal compound to the carbon-source raw material can stay within a range of 5 to 30% by mass, and it is more preferable that the amount of use of the metal compound be set so that this ratio can stay within a range of 5 to 20% by mass.

As described above, it is preferable that the nonmetal compound be a compound of at least one nonmetal selected from the group consisting of nitrogen, boron, sulfur and phosphorus. As the nonmetal compound, for example, there can be used at least one compound selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. An amount of use of the nonmetal compound is appropriately set according to a doping amount of the nonmetal atoms into the carbon-source raw material. It is preferable that the amount of use of the nonmetal compound be set so that a molar ratio of the metal atoms in the metal compound and the nonmetal atoms in the nonmetal compound can stay within a range of 1: 1 to 1: 2, and it is more preferable that the amount of use of the nonmetal compound be set so that this molar ratio can stay within a range of 1: 1.5 to 1: 1.8.

The mixture containing the nonmetal compound, the metal compound and the carbon-source raw material in the case of preparing the carbon-based material composed as the oxygen reduction catalyst can be obtained, for example, as follows. First, the carbon-source raw material, the metal compound, and the nonmetal compound are mixed with one another, and as necessary, a solvent such as ethanol is added to an obtained mixture, and a total amount of the mixture is adjusted. These are further dispersed by an ultrasonic dispersion method. Subsequently, after these are heated at an appropriate temperature (for example, 60 °C), the mixture is dried to remove the solvent. In this way, such a mixture containing the nonmetal compound, the metal compound and the carbon-source raw material is obtained.

Next, the obtained mixture is heated, for example, in a reducing atmosphere or an inert gas atmosphere. In this way, the nonmetal atoms are doped into the carbon-source raw material, and the metal atoms are also doped thereinto by the coordinate bond between the nonmetal atoms and the metal atoms. It is preferable that a heating temperature be within a range of 800 °C or more to 1000 °C or less, and it is preferable that a heating time be within a range of 45 seconds or more to less than 600 seconds. Since the heating time is short, the carbon-based material is efficiently produced, and the catalytic activity of the carbon-based material is further increased. Note that, preferably, a heating rate of the mixture at the start of heating in the heat treatment is 50 °C/s or more. Such rapid heating further enhances the catalytic activity of the carbon-based material.

Moreover, the carbon-based material may be further acid-washed. For example, the carbon-based material may be dispersed in pure water for 30 minutes by a homogenizer, and thereafter, the carbon-based material may be placed in 2M sulfuric acid and stirred at 80 °C for 3 hours. In this case, elution of the metal component from the carbon-based material is reduced.

By such a production method, a carbon-based material is obtained, in which contents of such an inactive metal compound and a metal crystal are significantly low, and electric conductivity is high.

### [Negative electrode]

Each of the negative electrodes 20 in this embodiment has functions to support the microorganisms to be described later, and further, to generate hydrogen ions and electrons from at least either of the organic matter and the nitrogen-containing compound in the electrolysis solution 70 by the catalytic action of the microorganisms. Therefore, the negative electrode 20 of this embodiment is not particularly limited as long as the negative electrode 20 has a configuration of generating such functions.

The negative electrode 20 in this embodiment has a structure in which microorganisms are supported on an electrical conductive sheet having electric conductivity. As the electrical conductive sheet, there can be used at least one selected from the group consisting of a porous electrical conductive sheet, a woven fabric electrical conductive sheet, and a nonwoven fabric electrical conductive sheet. Moreover, the electrical conductive sheet may be a laminated body formed by laminating a plurality of sheets on one another. Such a sheet having a plurality of pores is used as the electrical conductive sheet of the negative electrode 20, whereby it becomes easy for hydrogen ions generated by the local cell reaction to be described later to move in a direction of the ion transfer layer 30, thus making it possible to increase the rate of the oxygen reduction reaction. Moreover, from a viewpoint of enhancing the ion permeability, it is preferable that the electrical conductive sheet of the negative electrode 20 have a space (air gap) continuous in the lamination direction X of the positive electrode 10, the ion transfer layer 30 and the negative electrode 20, that is, in a thickness direction of the electrical conductive sheet.

The electrical conductive sheet may be a metal plate having a plurality of through holes in the thickness direction. Therefore, as a material that composes the electrical conductive sheet of the negative electrode 20, for example, there can be used at least one selected from the group consisting of electrical conductive metal such as aluminum, copper, stainless steel, nickel and titanium, carbon paper and carbon felt.

As the electrical conductive sheet of the negative electrode 20, the electric conductor layer for use in the positive electrode 10 may be used. Moreover, it is preferable that the negative electrode 20 contain graphite, and further, that the graphene layers in the graphite be arrayed along a plane in directions Y and Z perpendicular to the lamination direction X of the positive electrode 10, the ion transfer layer 30 and the negative electrode 20. The graphene layers are arrayed as described above, whereby electric conductivity thereof in the directions Y and Z perpendicular to the lamination direction X is enhanced more than electric conductivity thereof in the lamination direction X. Therefore, it becomes easy to conduct the electrons, which are generated by the local cell reaction of the negative electrode 20, to the external circuit, and it becomes possible to further enhance the efficiency of the cell reaction.

The microorganisms supported on the negative electrode 20 are not particularly limited as long as being microorganisms which decompose organic matter in the electrolysis solution 70 or a compound containing nitrogen; however, it is preferable to use anaerobic microorganisms which do not require oxygen for growth thereof. The anaerobic microorganisms do not require air for oxidatively decomposing the organic matter in the electrolysis solution 70. Therefore, electric power required to feed air can be reduced to a large extent. Moreover, since free energy acquired by the microorganisms is small, it becomes possible to reduce an amount of generated sludge.

It is preferable that the anaerobic microorganisms held by the negative electrode 20 be, for example, electricity-producing bacteria having an extracellular electron transfer mechanism. Specific examples of the anaerobic microorganisms include Geobacter bacteria, Shewanella bacteria, Aeromonas bacteria, Geothrix bacteria, and Saccharomyces bacteria.

The negative electrode 20 may hold the anaerobic microorganisms in such a manner that a biofilm containing the anaerobic microorganisms is laminated and fixed to the negative electrode 20 itself. Note that the term "biofilm" generally refers to a three-dimensional structure containing a microbial population and an extracellular polymeric substance (EPS) produced by the microbial population. However, the anaerobic microorganisms may be held on the negative electrode 20 without using the biofilm. Moreover, the anaerobic microorganisms may be held not only on the surface of the negative electrode 20 but also in the inside thereof.

### [Ion transfer layer]

The microbial fuel cell 100 of this embodiment further includes the ion transfer layers 30, each of which is provided between the positive electrode 10 and the negative electrode 20, and has proton permeability. Then, as shown in Fig. 1 and Fig. 2, each of the negative electrodes 20 is separated from the positive electrode 10 via the ion transfer layer 30. Each of the ion transfer layers 30 has a function to allow the permeation of the hydrogen ions generated at the negative electrode 20, and to move the generated hydrogen ions to the positive electrode 10 side.

As the ion transfer layer 30, for example, an ion exchange membrane using ion exchange resin can be used. As the ion exchange resin, for example, NAFION (registered trademark) made by DuPont Kabushiki Kaisha, and Flemion (registered trademark) and Selemion (registered trademark) made by Asahi Glass Co., Ltd. can be used.

Moreover, as the ion transfer layer 30, a porous membrane having pores capable of allowing the permeation of the hydrogen ions may be used. That is, the ion transfer layer 30 may be a sheet having a space (air gap) for moving the hydrogen ions from the negative electrode 20 to the positive electrode 10. Therefore, it is preferable that the ion transfer layer 30 have at least one selected from the group consisting of a porous sheet, a woven fabric sheet and a nonwoven fabric sheet. Moreover, at least one selected from the group consisting of a glass fiber membrane, a synthetic fiber membrane and a plastic nonwoven fabric can be used for the ion transfer layer 30, and the ion transfer layer 30 may be a laminated body formed by laminating a plurality of these on one another. Since such a porous sheet has a large number of pores in an inside thereof, it becomes possible for the hydrogen ions to move therethrough with ease. Note that a pore size of the ion transfer layer 30 is not particularly limited as long as the hydrogen ions can move from the negative electrode 20 to the positive electrode 10.

As mentioned above, the ion transfer layer 30 has such a function to allow the permeation of the hydrogen ions generated at the negative electrode 20, and to move the generated hydrogen ions to the positive electrode 10 side. However, for example, if the negative electrode 20 and the positive electrode 10 are in close proximity with each other without contact, then the hydrogen ions can move from the negative electrode 20 to the positive electrode 10. Therefore, in the microbial fuel cell 100 of this embodiment, the ion transfer layer 30 is not an essential constituent. However, provision of the ion transfer layer 30 makes it possible to efficiently move the hydrogen ions from the negative electrode 20 to the positive electrode 10, and it is preferable that the ion transfer layer 30 be provided from a viewpoint of enhancing the output.

Next, a description will be given of a function of the microbial fuel cell 100 according to this embodiment. When each of the electrode assemblies 40 composed of the positive electrodes 10, the negative electrodes 20 and the ion transfer layers 30, which are mentioned above, is immersed in the electrolysis solution 70, then the porous body layer 2 of the positive electrode 10 and the negative electrode 20 are immersed in the electrolysis solution 70, and at least a part of the water-repellent layer 4 is exposed to the gas phase 90. Moreover, at this time, the electric conductor layer 1 of the positive electrode 10 is also immersed in the electrolysis solution 70.

When the microbial fuel cell 100 is operated, the electrolysis solution 70 containing at least either one of organic matter and a nitrogen-containing compound is supplied to each of the negative electrodes 20, and air is supplied to each of the positive electrodes 10. At this time, the air is continuously supplied through an opening portion provided in an upper portion of the cassette substrate 50.

Then, in the positive electrode 10 shown in Fig. 4, air permeates the water-repellent layer 4 and is diffused by the electric conductor layer 1. Moreover, in the positive electrode 10A shown in Fig. 5, air permeates the water-repellent layer 4 and is directly supplied to the porous body layer 2. In the negative electrode 20, hydrogen ions and electrons are generated from at least either one of the organic matter and the nitrogen-containing compound in the electrolysis solution 70 by the catalytic action of the microorganisms. The generated hydrogen ions permeate the ion transfer layer 30 and move to the positive electrode 10 side. Moreover, the generated electrons move to the external circuit 110 through the electrical conductive sheet of the negative electrode 20, and further, move from the external circuit 110 to the electric conductor layer 1 of the positive electrode 10. Then, the hydrogen ions and the electrons are combined with oxygen by an action of the catalyst 3 in the porous body layer 2, and are consumed as water. At this time, the external circuit 110 recovers electrical energy flowing in such a closed circuit.

As described above, the microbial fuel cell 100 of this embodiment includes the positive electrodes 10 or 10A, the negative electrodes 20 that holds the microorganisms, and the electrolysis solution 70. Each of the positive electrodes 10 includes: an electric conductor layer 1; a porous body layer 2 that is laminated on the electric conductor layer 1 and supports the catalyst 3 therein; and the water-repellent layer 4 laminated on the surface 1b of the electric conductor layer 1, which is opposite of the surface 1a in contact with the porous body layer 2. Moreover, each of the positive electrodes 10A includes: the electric conductor layer 1; the porous body layer 2 that is laminated on the electric conductor layer 1 and supports the catalyst 3 therein; and the water-repellent layer 4 laminated on the surface 2b of the porous body layer 2, which is opposite of the surface 2a in contact with the electric conductor layer 1. Then, the porous body layer 2 and the negative electrode 20 are immersed in the electrolysis solution 70, and at least a part of the water-repellent layer 4 is exposed to the gas phase 90.

In the positive electrode 10 of this embodiment, the catalyst particles are disposed on the surface of the electric conductor layer 1 via the porous body layer 2, and therefore, the catalyst does not shrink even if being dried, and it becomes possible to prevent the cracks and the peeling from occurring. Therefore, it becomes possible to increase the oxygen reduction properties in the positive electrode 10, and to stably produce electrical energy. Moreover, since the porous body layer 2 is laminated on the electric conductor layer 1, rigidity of the whole of the positive electrode 10 can be increased even if the electric conductor layer 1 and the porous body layer 2 are porous.

For example, each of the negative electrodes 20 according to this embodiment may be modified by electron transfer mediator molecules. Alternatively, the electrolysis solution 70 in the wastewater tank 80 may contain the electron transfer mediator molecules. In this way, the electron transfer from the anaerobic microorganisms to the negative electrode 20 is promoted, and more efficient liquid treatment can be realized.

Specifically, in the metabolic mechanism by the anaerobic microorganisms, electrons are transferred within cells or with final electron acceptors. When such mediator molecules are introduced into the electrolysis solution 70, the mediator molecules act as the final electron acceptors for metabolism, and deliver the received electrons to the negative electrode 20. As a result, it becomes possible to enhance an oxidative degradation rate of the organic matter and the like in the electrolysis solution 70. The electron transfer mediator molecules as described above are not particularly limited. As the electron transfer mediator molecules as described above, for example, there can be used at least one selected from the group consisting of neutral red, anthraquinone-2,6-disulfonic acid (AQDS), thionine, potassium ferricyanide, and methyl viologen.

Note that the fuel cell unit 60 shown in Fig. 3 has a configuration in which the two membrane electrode assemblies 40 and the cassette substrate 50 are laminated on one another. However, this embodiment is not limited to this configuration. For example, the electrode assembly 40 may be joined only to one side surface 53 of the cassette substrate 50, and other side surface thereof may be sealed by a plate member. Moreover, in the cassette substrate 50 shown in Fig. 2 and Fig. 3, the whole of the upper portion thereof is open; however, the upper portion may be partially open or may not be open as long as it is possible to introduce air (oxygen) into the inside of the cassette substrate 50.

The wastewater tank 80 holds the electrolysis solution 70 in the inside thereof, and may have a configuration through which the electrolysis solution 70 is circulated. For example, as shown in Fig. 1 and Fig. 2, the wastewater tank 80 may be provided with a liquid supply port 81 for supplying the electrolysis solution 70 to the wastewater tank 80 and a liquid discharge port 82 for discharging the treated electrolysis solution 70 from the wastewater tank 80. Then, it is preferable that the electrolysis solution 70 be continuously supplied through the liquid supply port 81 and the liquid discharge port 82.

It is preferable that the wastewater tank 80 be maintained in an anaerobic condition where, for example, molecular oxygen is absent or a concentration of the molecular oxygen is extremely small even if the molecular oxygen is present. In this way, it becomes possible to keep the electrolysis solution 70 in the wastewater tank 80 so that the electrolysis solution 70 can hardly contact oxygen.

### EXAMPLES

Hereinafter, this embodiment will be described more in detail by an example and comparative examples; however, this embodiment is not limited to these examples.

### [Example 1]

In each of Examples 1 and 2, such an electrode having a configuration shown in Fig. 4, in which a graphite sheet was used as the electric conductor layer, was fabricated.

The electrode of this example was fabricated as follows. First, a graphite sheet as the electric conductor layer and a water-repellent sheet as the water-repellent layer were joined to each other by a silicone adhesive, whereby a laminated sheet composed of the graphite sheet, the silicone adhesive and the water-repellent sheet was fabricated. As the graphite sheet, Carbofit (registered trademark) made by Hitachi Chemical Co., Ltd. was used. As the silicone adhesive, one-component RTV silicone rubber KE-3475 made by Shin-Etsu Chemical Co., Ltd. was used. As the water-repellent sheet, Tyvek (registered trademark) made by DuPont-Asahi Flash Spun Products Co., Ltd. was used.

On the graphite sheet of this laminated sheet, a blended nonwoven fabric was laminated, which was made of polyethylene and polypropylene and had a thickness of 0.18 mm and a density of 15 g/m². Note that, as the nonwoven fabric, a polyolefin nonwoven fabric #210 of Pacific Giken Company, Ltd. was used. Then, on this nonwoven fabric, a dispersion liquid of an oxygen reduction catalyst was dropped to support this catalyst, and the dispersion liquid was dried, whereby an electrode sample of this example was obtained. Note that, as will be described later, the dispersion liquid of the oxygen reduction catalyst contains a PTFE dispersion liquid. Therefore, the dispersion liquid of the oxygen reduction catalyst was dropped on the nonwoven fabric and was dried after the graphite sheet was laminated on the nonwoven fabric, whereby the graphite sheet and the nonwoven fabric were joined to each other by an action of the PTFE dispersion liquid. Moreover, the graphite sheet and the nonwoven fabric were joined to each other also by van der Waals force therebetween.

Note that the oxygen reduction catalyst was prepared as follows. First, into a container, put were 3 g of carbon black, 0.1 M of an aqueous iron (III) chloride solution and 0.15 M of a pentaethylenehexamine ethanol solution, whereby a mixed solution was prepared. Note that, as the carbon black, Ketjen Black ECP600JD made by Lion Specialty Chemicals Co., Ltd. was used. An amount of use of the 0.1 M of aqueous iron (III) chloride solution was adjusted so that a ratio of iron atoms to the carbon black was 10% by mass. Ethanol was further added to this mixed solution, whereby a total amount thereof was adjusted to 9 mL. Then, this mixed solution was subjected to ultrasonic dispersion, and thereafter, was dried at a temperature of 60 °C by a dryer. In this way, a sample that contained carbon black, iron (III) chloride and pentaethylenehexamine was obtained.

Then, this sample was packed in one end of a quartz tube, and subsequently, an inside of this quartz tube was replaced with argon. This quartz tube was put into a furnace at 900 °C, and was pulled out after lapse of 45 seconds. When the quartz tube was inserted into the furnace, the quartz tube was inserted into the furnace while taking three seconds, whereby a heating rate for the sample at the start of heating was adjusted to 300 °C/s. Subsequently, argon gas was flown into the quartz tube, whereby the sample was cooled. In this way, an oxygen reduction catalyst was obtained. Moreover, the dispersion liquid of the oxygen reduction catalyst was adjusted by mixing 0.35 g of the powder oxygen reduction catalyst, 0.35 mL of the PTFE dispersion liquid and 2 mL of ion exchange water.

### [Example 2]

An electrode sample of this example was obtained in a similar way to Example 1 except that the nonwoven fabric for supporting the catalyst was changed to a blended nonwoven fabric made of polyethylene and polypropylene and had a thickness of 0.18 mm and a density of 60 g/m². Note that, as the nonwoven fabric, such a polyolefin nonwoven fabric #210 of Pacific Giken Company, Ltd. was used. Moreover, a supported amount of the catalyst was set equal to that in Example 1.

### [Comparative example 1]

First, in a similar way to Example 1, a laminated sheet composed of the graphite sheet, the silicone adhesive and the water-repellent sheet was fabricated. Next, on the graphite sheet of this laminated sheet, the dispersion liquid of the oxygen reduction catalyst was directly dropped and was dried, whereby an electrode sample of this example was obtained. That is, the electrode sample of this example does not use the nonwoven fabric as the porous body layer in the electrode samples of Examples 1 and 2. Note that a supported amount of the catalyst was set equal to that in Example 1.

### [Example 3]

In Example 3, an electrode having a configuration shown in Fig. 4, which used a mesh sheet made of stainless steel as the electric conductor layer, was fabricated.

The electrode of this example was fabricated as follows. First, a mesh sheet as the electric conductor layer, which was made of stainless steel 316, and a water-repellent sheet as the water-repellent layer were joined to each other by the silicone adhesive, whereby a laminated sheet composed of the mesh sheet, the silicone adhesive and the water-repellent sheet was fabricated. As the mesh sheet, a stainless steel mesh (0.1 Ø, 100 meshes) made by Okutani Ltd. was used. The same silicone adhesive and water-repellent sheet as in Example 1 were used.

On the mesh sheet of this laminated sheet, the nonwoven fabric of Example 1 was laminated, which had a thickness of 0.18 mm and a density of 15 g/m². Then, on this nonwoven fabric, the dispersion liquid of the oxygen reduction catalyst in Example 1 was dropped to support this catalyst, and the dispersion liquid was dried, whereby an electrode sample of this example was obtained. Note that a supported amount of the catalyst was set equal to that in Example 1.

### [Comparative example 2]

First, in a similar way to Example 3, a laminated sheet composed of the mesh sheet, the silicone adhesive and the water-repellent sheet was fabricated. Next, on the mesh sheet of this laminated sheet, the dispersion liquid of the oxygen reduction catalyst was directly dropped and was dried, whereby an electrode sample of this example was obtained. That is, the electrode sample of this example does not use the nonwoven fabric as the porous body layer in the electrode sample of Example 3. Note that a supported amount of the catalyst was set equal to that in Example 1.

### [Example 4]

In Example 4, such an electrode having a configuration shown in Fig. 5, which used a mesh sheet made of stainless steel as the electric conductor layer, was fabricated.

The electrode of this example was fabricated as follows. First, on the mesh sheet made of the stainless steel 316 as the electric conductor layer, which was used in Example 3, the nonwoven fabric of Example 1 was laminated, which had a thickness of 0.18 mm and a density of 15 g/m².

Then, on this nonwoven fabric, the dispersion liquid of the oxygen reduction catalyst in Example 1 was dropped to support the catalyst, and the dispersion liquid was dried. Then, the nonwoven fabric that supported the catalyst thereon and a water-repellent sheet as the water-repellent layer were joined to each other by a silicone adhesive, whereby an electrode sample of this example was obtained. Note that the same silicone adhesive and water-repellent sheet as in Example 1 were used. Moreover, a supported amount of the catalyst was set equal to that in Example 1.

### [Comparative example 3]

First, on the mesh sheet used in Example 4, the dispersion liquid of the oxygen reduction catalyst was directly dropped and was dried. Then, the mesh sheet that supported the catalyst thereon and a water-repellent sheet as the water-repellent layer were joined to each other by a silicone adhesive, whereby an electrode sample of this example was obtained. That is, the electrode sample of this example does not use the nonwoven fabric as the porous body layer in the electrode sample of Example 4. Note that a supported amount of the catalyst was set equal to that in Example 1.

### [Evaluation]

### (Electrochemical evaluation)

By linear sweep voltammetry, electrochemical properties of the electrode samples of Examples 1 to 4 and Comparative examples 1 to 3 were evaluated. Specifically, using the electrode samples of Examples 1 to 4 and Comparative examples 1 to 3, the electrochemical properties were measured in a Trizma buffer solution while setting a sweep rate to 1 mV/sec. As the Trizma buffer solution, a solution (0.1 M, contains 0.2% chloroform as preservative) made by Sigma-Aldrich Corporation was used. At this time, a platinum wire was used for a counter electrode, and a silver-silver chloride electrode was used for a reference electrode. Note that, since an absolute value of a current amount is increased as the oxygen reduction reaction goes on in the linear sweep voltammetry, it can be determined that a larger absolute value of the current amount brings superior oxygen reduction activity.

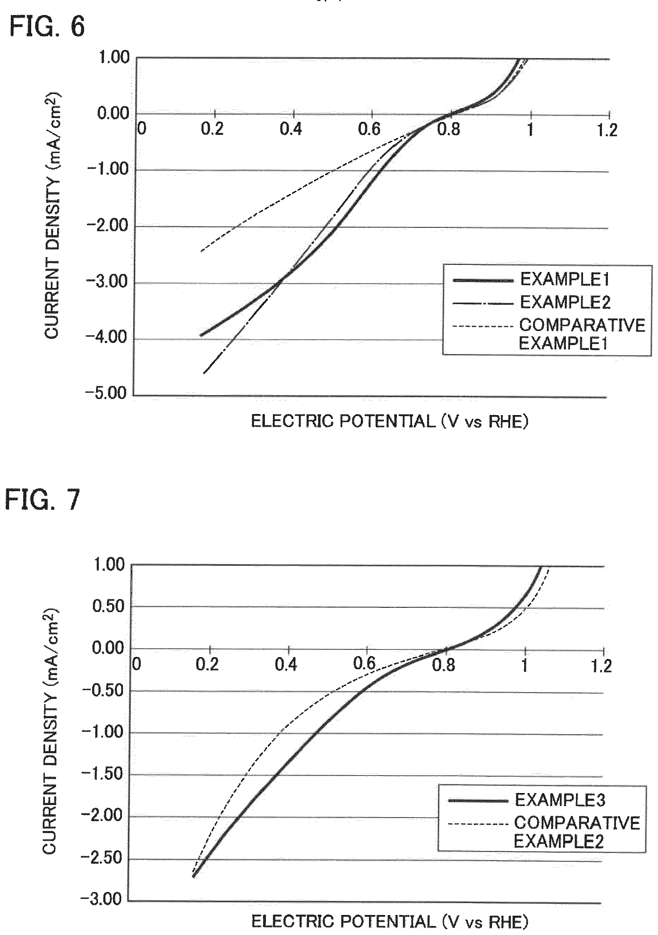

Fig. 6 shows evaluation results in the electrode samples of Example 1, Example 2 and Comparative example 1. Referring to Fig. 6, Examples 1 and 2 exhibited high current density values, in which good electrode characteristics were obtained; however, Comparative example 1 exhibited a lower current density value than Examples 1 and 2, in which the electrode characteristics were degraded. For example, current values at an electric potential of 0.6 V were 1.18 mA/cm² in Example 1, 0.94 mA/cm² in Example 2 and 0.63 mA/cm² in Comparative example 1. The catalyst was supported using the porous body layer, whereby oxygen reduction properties which were 1.5 times or more were exhibited in comparison when the porous body layer was not used.

Fig. 7 shows evaluation results in the electrode samples of Example 3 and Comparative example 2. Referring to Fig. 7, Example 3 exhibited a high current density value, in which good electrode characteristics were obtained; however, Comparative example 2 exhibited a lower current density value than Example 3, in which the electrode characteristics were degraded. For example, current values at an electric potential of 0.6 V were 0.45 mA/cm² in Example 3, and 0.29 mA/cm² in Comparative example 2. The catalyst was supported using the porous body layer, whereby oxygen reduction properties which were 1.5 times or more were exhibited in comparison when the porous body layer was not used.

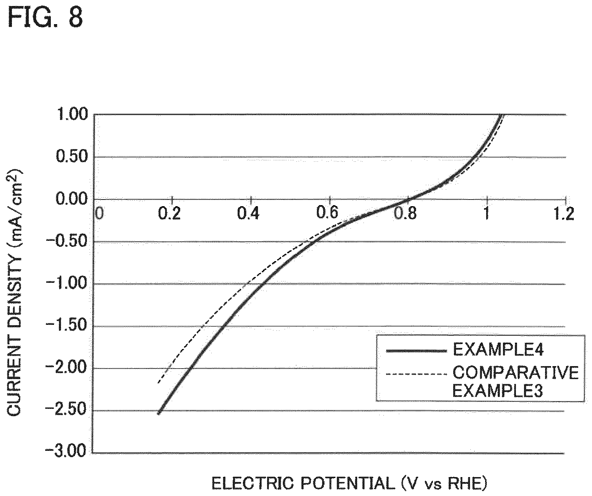

Fig. 8 shows evaluation results in the electrode samples of Example 4 and Comparative example 3. Referring to Fig. 8, Example 4 exhibited a high current density value, in which good electrode characteristics were obtained; however, Comparative example 3 exhibited a lower current density value than Example 4, in which the electrode characteristics were degraded. For example, current values at an electric potential of 0.6 V were 0.38 mA/cm² in Example 4, and 0.33 mA/cm² in Comparative example 3. The catalyst was supported using the porous body layer, whereby oxygen reduction properties which were 1.15 times or more were exhibited in comparison when the porous body layer was not used. It is seen that, though the results of Example 4 and Comparative example 3 exhibited smaller current density differences in comparison with those in the results of Examples 1 to 3 and Comparative examples 1 and 2, exhibited a larger difference on a lower electric potential side.

### (Surface observation)

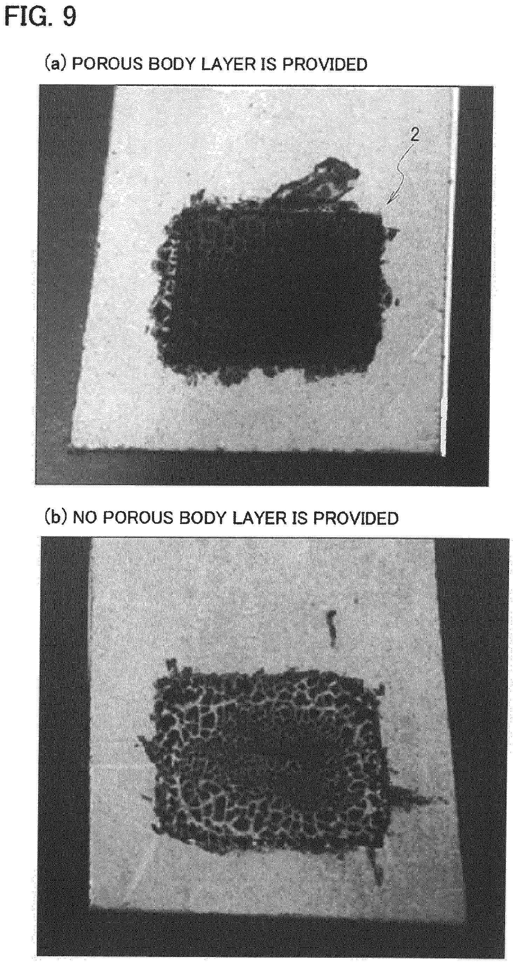

Surfaces of the electrode samples in Example 1 and Comparative example 1 were visually observed. Fig. 9(a) shows an observation result of the electrode sample in Example 1, and Fig. 9(b) shows an observation result of the electrode sample in Comparative example 1. Referring to Fig. 9, it is seen that a large number of cracks occurred in Comparative example 1 where the porous body layer was not used, and meanwhile, such cracks are prevented from occurring in Example 1 where the porous body layer was used. Based on this fact, it is considered that, in the case where the porous body layer is not used, the cracks occur at the time of removing the solvent from the dispersion liquid after the application of the catalyst, and the binding properties of the catalyst 3 to the electric conductor layer 1 are degraded.

Based on the results mentioned above, it is seen that the oxygen reduction properties are enhanced by disposing the catalyst on the surface of the electric conductor layer using the porous body layer. Moreover, it is seen that the use of the porous body layer prevents the cracks in the catalyst layer, resulting in stable production of electrical energy. Furthermore, it is seen that the oxygen reduction properties are enhanced in each of the laminated bodies shown in Fig. 4 and Fig. 5.

Although this embodiment has been described above, this embodiment is not limited to these described above, and various modifications are possible within the scope of the spirit of this embodiment. Specifically, in the drawings, each of the positive electrodes 10 and 10A, each including the electric conductor layer 1, the porous body layer 2 and the water-repellent layer 4, and the negative electrode 20 and the ion transfer layer 30 are formed into a rectangular shape. However, the shape of these is not particularly limited, and can be arbitrarily changed depending on a size of the fuel cell, desired power generation performance and the like. Moreover, an area of the respective layers can also be arbitrarily changed as long as desired functions can be exerted.

The entire contents of Japanese Patent Application No. 2016-035468 (filed on: February 26, 2016) are incorporated herein by reference.

### INDUSTRIAL APPLICABILITY

In accordance with the present invention, the catalyst is supported in the inside of the porous body layer, and accordingly, it becomes possible to obtain the microbial fuel cell capable of preventing or reducing the cracks of the catalyst layer and capable of producing electrical energy stably.

### REFERENCE SIGNS LIST

- 1: ELECTRIC CONDUCTOR LAYER
- 2: POROUS BODY LAYER
- 3: CATALYST
- 4: WATER-REPELLENT LAYER
- 10, 10A: POSITIVE ELECTRODE
- 20: NEGATIVE ELECTRODE
- 30: ION TRANSFER LAYER
- 70: ELECTROLYSIS SOLUTION
- 90: GAS PHASE
- 100: MICROBIAL FUEL CELL

## Claims

1. A microbial fuel cell comprising:
a positive electrode comprising: an electric conductor layer; a porous body layer that is laminated on the electric conductor layer and supports a catalyst therein; and a water-repellent layer that is laminated on a surface of the electric conductor layer, the surface being opposite of a surface of the electric conductor layer in contact with the porous body layer, or a surface of the porous body layer, the surface being opposite of a surface of the porous body layer in contact with the electric conductor layer;
a negative electrode that holds microorganisms; and
an electrolysis solution,
wherein the porous body layer and the negative electrode are immersed in the electrolysis solution, and at least a part of the water-repellent layer is exposed to a gas phase.

2. The microbial fuel cell according to claim 1, wherein arithmetic mean roughness Ra of the surface of the electric conductor layer in contact with the porous body layer is 0.1 µm or more and 100 µm or less.

3. The microbial fuel cell according to claim 1 or 2, further comprising: an ion transfer layer that is provided between the positive electrode and the negative electrode and has proton permeability.

4. The microbial fuel cell according to any one of claims 1 to 3, wherein the porous body layer is made of a nonwoven fabric.
